# EUROPEAN PATENT APPLICATION

(11) **EP 4 826 364 A1**
(43) Date of publication of application: **21.10.2026**
(21) Application number: 25747411.4
(22) Date of filing: 02.01.2025
(51) Int. Cl.: G01N 21/88

(54) **FLEXIBLE CONNECTION SYSTEM FOR BATTERY CELL ASSEMBLY AND DETECTION METHOD FOR BATTERY CELL ASSEMBLY**

(30) Priority: 31.01.2024 CN 202410137217
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: GAO, Feihu, Ningde, Fujian 352100 (CN); JIANG, Ping, Ningde, Fujian 352100 (CN); LU, Gaofeng, Ningde, Fujian 352100 (CN); ZHANG, Zhipeng, Ningde, Fujian 352100 (CN)
(74) Representative: Kraus & Lederer PartGmbB
(86) International application number: PCT/CN2025/070226
(87) International publication number: WO 2025/161835

(57) **Abstract**

This application discloses a flexible connection system for a cell assembly (100) and a detection method for a cell assembly (100). The system includes: an upper-level computer, configured to send an image acquisition signal to a first camera (320) and a second camera (340); a first prism (310), configured to image a first side of the cell assembly (100) in a third direction; the first camera (320), configured to acquire, based on the image acquisition signal, an image of the first side of the cell assembly (100) in the third direction from the first prism (310) to obtain a first image; a second prism (330), configured to image a second side of the cell assembly (100) in the third direction; and the second camera (340), configured to acquire, based on the image acquisition signal, an image of the second side of the cell assembly (100) in the third direction from the second prism (330) to obtain a second image; where the upper-level computer is further configured to receive the first image and the second image, determine a first detection result of a cathode-end snap-fit member (130) based on the first image, and determine a second detection result of an anode-end snap-fit member (140) based on the second image. In this way, detection of whether the snap-fit members are installed in place is realized.

## Description

### CROSS-REFERENCE TO RELATED APPLICATIONS

This application claims priority to Chinese Patent Application No. 202410137217.0, filed on January 31, 2024 and entitled "FLEXIBLE CONNECTION SYSTEM FOR CELL ASSEMBLY AND DETECTION METHOD FOR CELL ASSEMBLY", which is incorporated herein by reference in its entirety.

### TECHNICAL FIELD

This application relates to the field of visual detection, and in particular, to a flexible connection system for a cell assembly and a detection method for a cell assembly.

### BACKGROUND

A top bracket may be configured to isolate a cell from a tab, support an end face of the cell, prevent decarbonization of the cell, and prevent the cell from squeezing the tab, thereby avoiding short circuit and failure of the cell.

Currently, a top bracket and a top cover may be fixed together via a snap-fit member. However, if the snap-fit member is not installed in place, the cell is damaged. Therefore, there is a need for a solution to detect whether the snap-fit member is installed in place.

### SUMMARY

This application provides a flexible connection system for a cell assembly and a detection method for a cell assembly, so as to detect whether a snap-fit member is installed in place.

According to a first aspect, this application provides a flexible connection system for a cell assembly, where the cell assembly includes a top cover, a top bracket, and two bare cells, the two bare cells are spaced apart in a first direction, the top cover and the top bracket are located between the two bare cells, the top bracket is disposed on a side of the top cover in a second direction and is fixed to the top cover via a cathode-end snap-fit member and an anode-end snap-fit member, the cathode-end snap-fit member is located at an edge portion of a first side of the cell assembly in a third direction, and the anode-end snap-fit member is located at an edge portion of a second side of the cell assembly in the third direction, the first direction, the second direction, and the third direction intersecting with each other; and the system includes: an upper-level computer, electrically connected to a first camera and a second camera and configured to send an image acquisition signal to the first camera and the second camera in a case that the cell assembly reaches a detection station; a first prism, configured to image the first side of the cell assembly in the third direction; the first camera, configured to acquire, based on the image acquisition signal, an image of the first side of the cell assembly in the third direction from the first prism to obtain a first image; a second prism, configured to image the second side of the cell assembly in the third direction; and the second camera, configured to acquire, based on the image acquisition signal, an image of the second side of the cell assembly in the third direction from the second prism to obtain a second image; where the upper-level computer is further configured to receive the first image and the second image, determine a first detection result of the cathode-end snap-fit member based on the first image, and determine a second detection result of the anode-end snap-fit member based on the second image, where the first detection result is used to indicate whether the cathode-end snap-fit member is installed in place, and the second detection result is used to indicate whether the anode-end snap-fit member is installed in place.

In this way, the cathode-end snap-fit member is located at the edge portion of the first side of the cell assembly in the third direction, the anode-end snap-fit member is located at the edge portion of the second side of the cell assembly in the third direction, the first prism may image the first side of the cell assembly in the third direction, the second prism may image the second side of the cell assembly in the third direction, the upper-level computer may send an image acquisition signal to the first camera and the second camera in a case that the cell assembly reaches the detection station, the first camera may acquire an image of the first side of the cell assembly in the third direction from the first prism to obtain a first image, the second camera may acquire, based on the image acquisition signal, an image of the second side of the cell assembly in the third direction from the second prism to obtain a second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

In some embodiments, the system further includes: a light source controller, electrically connected to the upper-level computer, a first light source module, and a second light source module; where the upper-level computer is configured to send a brightness control signal to the light source controller in a case that the cell assembly reaches the detection station; and the light source controller is configured to adjust brightness of the first light source module and brightness of the second light source module based on the brightness control signal; the first light source module, configured to illuminate an edge portion of the first side of the cell assembly in the third direction; where the first camera is configured to acquire, in a case that the first side of the cell assembly in the third direction is illuminated by the first light source module, the image of the first side of the cell assembly in the third direction from the first prism to obtain the first image; and the second light source module, configured to illuminate an edge portion of the second side of the cell assembly in the third direction; where the second camera is configured to acquire, in a case that the second side of the cell assembly in the third direction is illuminated by the second light source module, the image of the second side of the cell assembly in the third direction from the second prism to obtain the second image.

In this way, the first light source module is used to illuminate the edge portion of the first side of the cell assembly in the third direction, and the second light source module is used to illuminate the edge portion of the second side of the cell assembly in the third direction, facilitating acquisition of the clearer first image and second image.

In some embodiments, the system further includes: a first diffuse reflection plate, located between a light emitting side of the first light source module and the first side of the cell assembly in the third direction and configured to diffusely reflect a first light ray emitted by the first light source module to form a second light ray; where the first camera is configured to acquire, in a case that the first side of the cell assembly in the third direction is illuminated by the second light ray, the image of the first side of the cell assembly in the third direction from the first prism to obtain the first image; and a second diffuse reflection plate, located between a light emitting side of the second light source module and the second side of the cell assembly in the third direction and configured to diffusely reflect a third light ray emitted by the second light source module to form a fourth light ray; where the second camera is configured to acquire, in a case that the second side of the cell assembly in the third direction is illuminated by the fourth light ray, the image of the second side of the cell assembly in the third direction from the second prism to obtain the second image.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments, the first prism includes a first reflective area, where the first reflective area is configured to reflect a fifth light ray reflected from the first side of the cell assembly in the third direction to the first camera; and the second prism includes a second reflective area, where the second reflective area is configured to reflect a sixth light ray reflected from the second side of the cell assembly in the third direction to the second camera.

In this way, the first prism is used to reflect the first side of the cell assembly in the third direction to the first camera, and the second prism is used to reflect the second side of the cell assembly in the third direction to the second camera. This reduces the space occupied by the flexible connection system for a cell assembly, and improves space utilization, so that whether the snap-fit members are installed in place is detected in a relatively small space. This also broadens application scenarios of the flexible connection system for a cell assembly.

In some embodiments, the first light ray emitted by the first light source module forms the second light ray after being diffusely reflected by the first diffuse reflection plate, and the second light ray is projected to the first side of the cell assembly in the third direction; the first camera is configured to acquire a position at which the first side of the cell assembly in the third direction is illuminated by the second light ray, to obtain the first image; the third light ray emitted by the second light source module forms the fourth light ray after being diffusely reflected by the second diffuse reflection plate, and the fourth light ray is projected to the second side of the cell assembly in the third direction; and the second camera is configured to acquire a position at which the second side of the cell assembly in the third direction is illuminated by the fourth light ray, to obtain the second image.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments, the system further includes: a lower-level computer, electrically connected to the upper-level computer and configured to send a trigger signal to the upper-level computer in a case that the cell assembly reaches the detection station and both the first camera and the second camera are ready; where the upper-level computer is configured to send an image acquisition signal to the first camera and the second camera in response to the trigger signal.

In this way, the lower-level computer determines whether the cell assembly is in place and whether the first camera and the second camera are ready, so as to accurately trigger the upper-level computer to control other modules, thereby successfully completing visual detection.

In some embodiments, the upper-level computer is further configured to send an exposure time control signal to the first camera and the second camera; the first camera is further configured to adjust an exposure time based on the exposure time control signal and acquire the first image based on the adjusted exposure time; and the second camera is further configured to adjust an exposure time based on the exposure time control signal and acquire the second image based on the adjusted exposure time.

In this way, the upper-level computer controls the exposure times of the first camera and the second camera, allowing the acquired images to better meet user requirements.

In some embodiments, the lower-level computer is further configured to send an identifier of the cell assembly to the upper-level computer; the upper-level computer is further configured to associate a detection result with the identifier of the cell assembly, where the detection result includes the first detection result and the second detection result; and the lower-level computer is further configured to search for the detection result based on the identifier of the cell assembly.

In this way, the identifier of the cell assembly is associated with the detection result, facilitating indexing and retrieval of the detection result of the cell assembly.

In some embodiments, in a case that the first detection result indicates that the cathode-end snap-fit member is not installed in place, the first detection result further includes a reason why the cathode-end snap-fit member is not installed in place; where the reason includes any one of: a snap-fit member on a single side is not fastened, snap-fit members on two sides are not fastened, and a snap-fit member is placed reversely.

In this way, it is possible to determine whether the cathode snap-fit member is installed in place, and also to determine, in a case that the cathode snap-fit member is not installed in place, the reason why the cathode snap-fit member is not installed in place.

According to a second aspect, this application provides a detection method for a cell assembly, where the cell assembly includes a top cover, a top bracket, and two bare cells, the two bare cells are spaced apart in a first direction, the top cover and the top bracket are located between the two bare cells, the top bracket is disposed on a side of the top cover in a second direction and is fixed to the top cover via a cathode-end snap-fit member and an anode-end snap-fit member, the cathode-end snap-fit member is located at an edge portion of a first side of the cell assembly in a third direction, and the anode-end snap-fit member is located at an edge portion of a second side of the cell assembly in the third direction, the first direction, the second direction, and the third direction intersecting with each other; and the system includes: sending, by an upper-level computer, an image acquisition signal to a first camera and a second camera in a case that the cell assembly reaches a detection station; imaging, by a first prism, the first side of the cell assembly in the third direction; acquiring, by the first camera based on the image acquisition signal, an image of the first side of the cell assembly in the third direction from the first prism to obtain a first image; imaging, by a second prism, the second side of the cell assembly in the third direction; acquiring, by the second camera based on the image acquisition signal, an image of the second side of the cell assembly in the third direction from the second prism to obtain a second image; and receiving, by the upper-level computer, the first image and the second image, determining a first detection result of the cathode-end snap-fit member based on the first image, and determining a second detection result of the anode-end snap-fit member based on the second image, where the first detection result is used to indicate whether the cathode-end snap-fit member is installed in place, and the second detection result is used to indicate whether the anode-end snap-fit member is installed in place.

In this way, the cathode-end snap-fit member is located at the edge portion of the first side of the cell assembly in the third direction, the anode-end snap-fit member is located at the edge portion of the second side of the cell assembly in the third direction, the first prism may image the first side of the cell assembly in the third direction, the second prism may image the second side of the cell assembly in the third direction, the upper-level computer may send an image acquisition signal to the first camera and the second camera in a case that the cell assembly reaches the detection station, the first camera may acquire an image of the first side of the cell assembly in the third direction from the first prism to obtain a first image, the second camera may acquire, based on the image acquisition signal, an image of the second side of the cell assembly in the third direction from the second prism to obtain a second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

In some embodiments, the method further includes: sending, by the upper-level computer, a brightness control signal to a light source controller in a case that the cell assembly reaches the detection station; adjusting, by the light source controller, brightness of a first light source module and brightness of a second light source module based on the brightness control signal; illuminating, by the first light source module, an edge portion of the first side of the cell assembly in the third direction; and illuminating, by the second light source module, an edge portion of the second side of the cell assembly in the third direction; where the acquiring, by the first camera based on the image acquisition signal, an image of the first side of the cell assembly in the third direction from the first prism to obtain a first image includes: acquiring, by the first camera based on the image acquisition signal in a case that the first side of the cell assembly in the third direction is illuminated by the first light source module, the image of the first side of the cell assembly in the third direction from the first prism to obtain the first image; and the acquiring, by the second camera based on the image acquisition signal, an image of the second side of the cell assembly in the third direction from the second prism to obtain a second image includes: acquiring, by the second camera based on the image acquisition signal in a case that the second side of the cell assembly in the third direction is illuminated by the second light source module, the image of the second side of the cell assembly in the third direction from the second prism to obtain the second image.

In this way, the first light source module is used to illuminate the edge portion of the first side of the cell assembly in the third direction, and the second light source module is used to illuminate the edge portion of the second side of the cell assembly in the third direction, facilitating acquisition of the clearer first image and second image.

In some embodiments, the method further includes: diffusely reflecting, by a first diffuse reflection plate, a first light ray emitted by the first light source module to form a second light ray; and diffusely reflecting, by a second diffuse reflection plate, a third light ray emitted by the second light source module to form a fourth light ray; where the acquiring, by the first camera based on the image acquisition signal in a case that the first side of the cell assembly in the third direction is illuminated by the first light source module, the image of the first side of the cell assembly in the third direction from the first prism to obtain the first image includes: acquiring, by the first camera based on the image acquisition signal in a case that the first side of the cell assembly in the third direction is illuminated by the second light ray, the image of the first side of the cell assembly in the third direction from the first prism to obtain the first image; and the acquiring, by the second camera based on the image acquisition signal in a case that the second side of the cell assembly in the third direction is illuminated by the second light source module, the image of the second side of the cell assembly in the third direction from the second prism to obtain the second image includes: acquiring, by the second camera based on the image acquisition signal in a case that the second side of the cell assembly in the third direction is illuminated by the fourth light ray, the image of the second side of the cell assembly in the third direction from the second prism to obtain the second image.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments, the first prism includes a first reflective area, the second prism includes a second reflective area, and the method further includes: reflecting, by the first reflective area, a fifth light ray reflected from the first side of the cell assembly in the third direction to the first camera; and reflecting, by the second reflective area, a sixth light ray reflected from the second side of the cell assembly in the third direction to the second camera.

In this way, the first prism is used to reflect the first side of the cell assembly in the third direction to the first camera, and the second prism is used to reflect the second side of the cell assembly in the third direction to the second camera. This reduces the space occupied by the flexible connection system for a cell assembly, and improves space utilization, so that whether the snap-fit members are installed in place is detected in a relatively small space. This also broadens application scenarios of the flexible connection system for a cell assembly.

In some embodiments, the sending, by an upper-level computer, an image acquisition signal to a first camera and a second camera in a case that the cell assembly reaches a detection station includes: sending, by a lower-level computer, a trigger signal to the upper-level computer in a case that the cell assembly reaches the detection station and both the first camera and the second camera are ready; and sending, by the upper-level computer, the image acquisition signal to the first camera and the second camera in response to the trigger signal.

In this way, the lower-level computer determines whether the cell assembly is in place and whether the first camera and the second camera are ready, so as to accurately trigger the upper-level computer to control other modules, thereby successfully completing visual detection.

In some embodiments, the method further includes: sending, by the upper-level computer, an exposure time control signal to the first camera and the second camera; where the acquiring an image of the first side of the cell assembly in the third direction from the first prism to obtain a first image includes: adjusting, by the first camera, an exposure time based on the exposure time control signal and acquiring, based on the adjusted exposure time, the image of the first side of the cell assembly in the third direction from the first prism to obtain the first image; and the acquiring an image of the second side of the cell assembly in the third direction from the second prism to obtain a second image includes: adjusting, by the second camera, an exposure time based on the exposure time control signal and acquiring, based on the adjusted exposure time, the image of the second side of the cell assembly in the third direction from the second prism to obtain the second image.

In this way, the upper-level computer controls the exposure times of the first camera and the second camera, allowing the acquired images to better meet user requirements.

In some embodiments, the method further includes: sending, by the lower-level computer, an identifier of the cell assembly to the upper-level computer; associating, by the upper-level computer, a detection result with the identifier of the cell assembly, where the detection result includes the first detection result and the second detection result; and searching for, by the lower-level computer, the detection result based on the identifier of the cell assembly.

In this way, the identifier of the cell assembly is associated with the detection result, facilitating indexing and retrieval of the detection result of the cell assembly.

In some embodiments, in a case that the first detection result indicates that the cathode-end snap-fit member is not installed in place, the first detection result further includes a reason why the cathode-end snap-fit member is not installed in place; where the reason includes any one of: a snap-fit member on a single side is not fastened, snap-fit members on two sides are not fastened, and a snap-fit member is placed reversely.

In this way, it is possible to determine whether the cathode snap-fit member is installed in place, and also to determine, in a case that the cathode snap-fit member is not installed in place, the reason why the cathode snap-fit member is not installed in place.

In some embodiments, the determining a first detection result of the cathode-end snap-fit member based on the first image includes: performing, by using a snap-fit member detection model, detection on the cathode-end snap-fit member based on the first image to obtain the first detection result.

In this way, the cathode-end snap-fit member is quickly and accurately detected using an artificial intelligence (Artificial Intelligence, AI) algorithm.

In some embodiments, the snap-fit member detection model includes a target detection network, a semantic segmentation network, and a result determining network; and the performing, by using a snap-fit member detection model, detection on the cathode-end snap-fit member based on the first image to obtain the first detection result includes: performing, by using the target detection network, target detection on the first image to obtain a first region corresponding to the cell assembly; performing, by using the semantic segmentation network, semantic segmentation on the first image based on the first region to obtain a mask image; and determining, by using the result determining network, the first detection result based on a width of a preset position of the first region in the mask image.

In this way, the first region is first determined through target detection, a mask image is obtained using the semantic segmentation network, and then a result is determined based on the width of the preset position, thereby quickly and accurately determining the first detection result.

In some embodiments, the preset position includes a first position, a second position, and a third position, where the first position and the third position are positions of the cathode-end snap-fit member, and the second position is located between the first position and the second position; and the determining, by using the result determining network, the first detection result based on a width of a preset position of the first region in the mask image includes: in a case that widths of the first position, the second position and the third position are all equal to a first threshold, determining that the first detection result indicates that the cathode-end snap-fit member is installed in place; in a case that a width of the first position is greater than the first threshold and a width of the third position is equal to the first threshold, or a width of the first position is equal to the first threshold and a width of the third position is greater than the first threshold, determining that the first detection result indicates that the cathode-end snap-fit member is not installed in place and the reason is that a snap-fit member on a single side is not fastened; in a case that widths of the first position, the second position and the third position are all greater than a second threshold, determining that the first detection result indicates that the cathode-end snap-fit member is not installed in place and the reason is that snap-fit members on two sides are not fastened, where the second threshold is greater than the first threshold; and in a case that widths of the first position and the third position are both greater than the first threshold and less than the second threshold and a width of the second position is greater than the second threshold, determining that the first detection result indicates that the cathode-end snap-fit member is not installed in place and the reason is that a snap-fit member is placed reversely.

In this way, whether the cathode-end snap-fit member is installed in place is accurately determined through the above process, and if it is not installed in place, the reason why it is not installed in place is also accurately determined, thereby avoiding overkill or underkill during detection of the cell assembly.

The foregoing description is merely an overview of the technical solution of this application. For a better understanding of the technical means in this application such that they are implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a first schematic diagram of a cell assembly according to some embodiments of this application;
FIG. 2 is a second schematic diagram of a cell assembly according to some embodiments of this application;
FIG. 3 is a first schematic diagram of a flexible connection system for a cell assembly according to some embodiments of this application;
FIG. 4 is a second schematic diagram of a flexible connection system for a cell assembly according to some embodiments of this application;
FIG. 5 is a first flowchart of a detection method for a cell assembly according to some embodiments of this application; and
FIG. 6 is a second flowchart of a detection method for a cell assembly according to some embodiments of this application.

In the drawings, the drawings are not necessarily drawn to actual scale.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means at least two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art understand specific meanings of these terms in the embodiments of this application as suitable to specific situations.

As described in the background, in a flexible connection process for cell assemblies, a protective measure of applying polyethylene terephthalate (polyethylene terephthalate, PET) adhesive was previously used. Recently, a top bracket is used as a protective measure, and the top bracket and a top cover are fixed via a snap-fit member. However, if the snap-fit member is not installed in place, the cell may be damaged. In view of this, a step of detecting whether the snap-fit member is installed in place may be added to the flexible connection process for cell assemblies. Therefore, there is a need for a solution to detect whether the snap-fit member is installed in place.

In view of the above technical problems, this application provides a flexible connection system for a cell assembly and a detection method for a cell assembly. A cathode-end snap-fit member is located at an edge portion of a first side of the cell assembly in a third direction, an anode-end snap-fit member is located at an edge portion of a second side of the cell assembly in the third direction, a first prism may image the first side of the cell assembly in the third direction, the second prism may image the second side of the cell assembly in the third direction, an upper-level computer may send an image acquisition signal to the first camera and the second camera in a case that the cell assembly reaches a detection station, the first camera may acquire an image of the first side of the cell assembly in the third direction from the first prism to obtain a first image, the second camera may acquire, based on the image acquisition signal, an image of the second side of the cell assembly in the third direction from the second prism to obtain a second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

The following describes in detail the flexible connection system for a cell assembly and the detection method for a cell assembly according to the embodiments of this application.

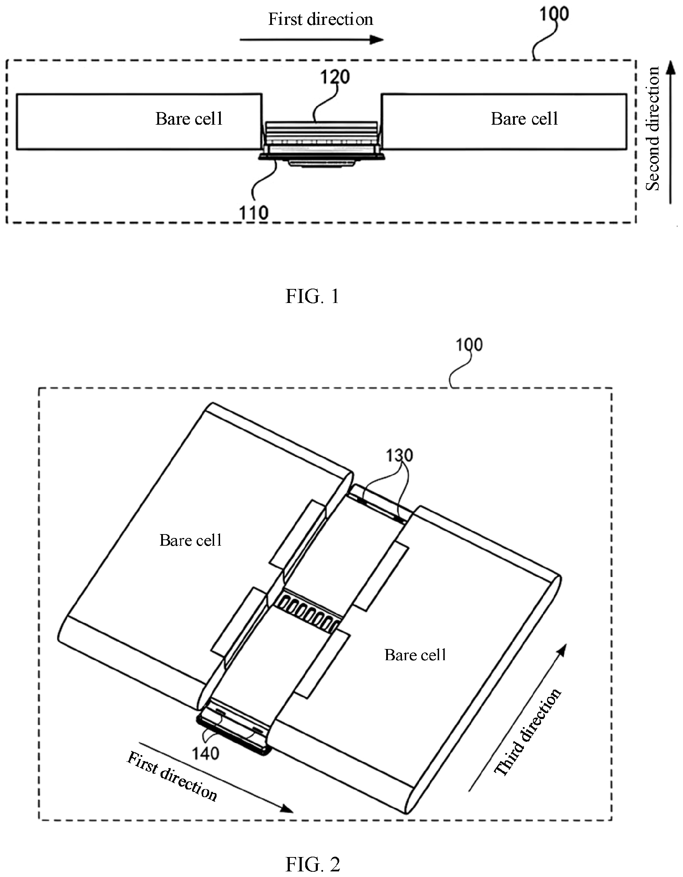

This application provides a flexible connection system for a cell assembly. As shown in FIG. 1, a cell assembly 100 may include: a top cover 110, a top bracket 120, and two bare cells, the two bare cells may be spaced apart in a first direction, the top cover 110 and the top bracket 120 may be located between the two bare cells, and the top bracket 120 may be disposed on a side of the top cover 110 in a second direction and fixed to the top cover 110 via a cathode-end snap-fit member and an anode-end snap-fit member. As shown in FIG. 2, the cathode-end snap-fit member 130 may be located at an edge portion of a first side of the cell assembly 100 in a third direction, and the anode-end snap-fit member 140 may be located at an edge portion of a second side of the cell assembly 100 in the third direction, the first direction, the second direction, and the third direction intersecting with each other.

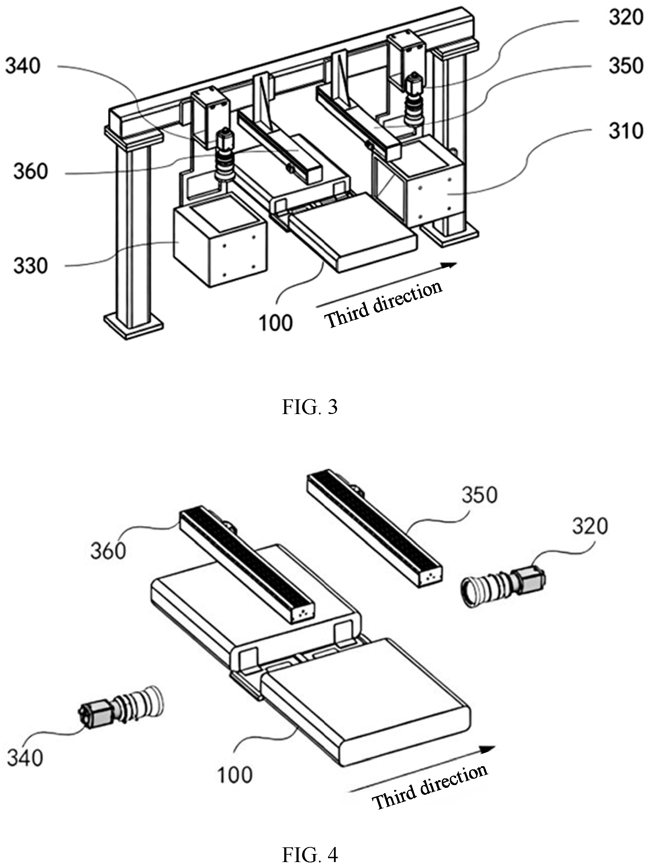

As shown in FIG. 3, the flexible connection system for a cell assembly may include: an upper-level computer (not shown in the figure), a first prism 310, a first camera 320, a second prism 330, and a second camera 340.

The upper-level computer may be electrically connected to the first camera 320 and the second camera 340, and may be configured to send an image acquisition signal to the first camera 320 and the second camera 340 in a case that the cell assembly 100 reaches a detection station;
the first prism 310 may be configured to image the first side of the cell assembly 100 in the third direction;
the first camera 320 may be configured to acquire, based on the image acquisition signal, an image of the first side of the cell assembly 100 in the third direction from the first prism 310 to obtain a first image;
the second prism 330 may be configured to image the second side of the cell assembly 100 in the third direction; and
the second camera 340 may be configured to acquire, based on the image acquisition signal, an image of the second side of the cell assembly 100 in the third direction from the second prism 330 to obtain a second image; where
the upper-level computer may be further configured to receive the first image and the second image, determine a first detection result of the cathode-end snap-fit member based on the first image, and determine a second detection result of the anode-end snap-fit member based on the second image, where the first detection result may be used to indicate whether the cathode-end snap-fit member is installed in place, and the second detection result may be used to indicate whether the anode-end snap-fit member is installed in place.

Herein, the first direction, the second direction, and the third direction may be perpendicular to one another.

Both the first camera 320 and the second camera 340 may be 2D area-scan cameras. The first camera 320 and the second camera 340 each may capture images in a fixed shooting or flying trigger mode to reduce CT.

The top bracket 120, the cathode-end snap-fit member 130, and the anode-end snap-fit member 140 may all be made of polycarbonate (Polycarbonate, PC) transparent materials.

The cathode-end snap-fit member 130 and the anode-end snap-fit member 140 may have a foolproof design to avoid reverse installation of the top bracket 120. Specifically, it may be designed such that the cathode-end snap-fit member 130 and the anode-end snap-fit member 140 are not allowed to be installed in place in a case that the top bracket 120 is reversely installed. For example, there may be two cathode-end snap-fit members 130 and two anode-end snap-fit members 140, and a distance between the two cathode-end snap-fit members 130 is different from a distance between the two anode-end snap-fit members 140. In this way, when the top bracket 120 is reversely installed, neither the cathode-end snap-fit members 130 nor the anode-end snap-fit members 140 are allowed to be installed in place.

Specifically, in a case that the cell assembly 100 reaches the detection station, the upper-level computer may send an image acquisition signal to the first camera 320 and the second camera 340, the first prism 310 may image the first side of the cell assembly 100 in the third direction, the first camera 320 may acquire, based on the image acquisition signal, an image of the first side of the cell assembly 100 in the third direction from the first prism 310 to obtain a first image, the second prism 330 may image the second side of the cell assembly 100 in the third direction, the second camera 340 may acquire, based on the image acquisition signal, an image of the second side of the cell assembly 100 in the third direction from the second prism 330 to obtain a second image, and then the upper-level computer may receive the first image and the second image, determine a first detection result of the cathode-end snap-fit member 130 based on the first image, and determine a second detection result of the anode-end snap-fit member 140 based on the second image.

In some embodiments of this application, in a case that the first detection result indicates that the cathode-end snap-fit member is not installed in place, the first detection result may further include a reason why the cathode-end snap-fit member is not installed in place; where
the reason may include any one of: a snap-fit member on a single side is not fastened, snap-fit members on two sides are not fastened, and a snap-fit member is placed reversely.

Herein, the number of the cathode-end snap-fit members may be 2. That a snap-fit member on a single side is not fastened may indicate that only one of the two cathode-end snap-fit members is not fastened, that snap-fit members on two sides are not fastened may indicate that both of the two cathode-end snap-fit members are not fastened, and that a snap-fit member is placed reversely may indicate that the cathode-end snap-fit member is located at an installation position of the anode-end snap-fit member.

In this way, it is possible to determine whether the cathode snap-fit member is installed in place, and also to determine, in a case that the cathode snap-fit member is not installed in place, the reason why the cathode snap-fit member is not installed in place.

In some embodiments of this application, in a case that the second detection result indicates that the anode-end snap-fit member is not installed in place, the second detection result may further include a reason why the anode-end snap-fit member is not installed in place; where
the reason may include any one of: a snap-fit member on a single side is not fastened, snap-fit members on two sides are not fastened, and a snap-fit member is placed reversely.

Herein, the number of the anode-end snap-fit members may be 2. That a snap-fit member on a single side is not fastened may indicate that only one of the two anode-end snap-fit members is not fastened, that snap-fit members on two sides are not fastened may indicate that both of the two anode-end snap-fit members are not fastened, and that a snap-fit member is placed reversely may indicate that the anode-end snap-fit member is located at an installation position of the cathode-end snap-fit member.

In this way, it is possible to determine whether the anode snap-fit member is installed in place, and also to determine, in a case that the anode snap-fit member is not installed in place, the reason why the anode snap-fit member is not installed in place.

In some embodiments of this application, as shown in FIG. 3, the first prism 310 may include a first reflective area, where the first reflective area may be configured to reflect a fifth light ray reflected from the first side of the cell assembly 100 in the third direction to the first camera 320; and
the second prism 330 may include a second reflective area, where the second reflective area may be configured to reflect a sixth light ray reflected from the second side of the cell assembly 100 in the third direction to the second camera 340.

For example, the first prism 310 and the second prism 330 may be 45° prisms, and the first reflective area and the second reflective area are opposite each other in the third direction. The first camera 320 and the second camera 340 are spaced apart in the third direction. The first camera 320 and the first prism 310 are spaced apart in the second direction, and lens of the first camera 320 faces the first prism 310. The second camera 340 and the second prism 330 are spaced apart in the second direction, and lens of the second camera 340 faces the second prism 330.

In this way, the first prism is used to reflect the first side of the cell assembly in the third direction to the first camera, and the second prism is used to reflect the second side of the cell assembly in the third direction to the second camera. This reduces the space occupied by the flexible connection system for a cell assembly, and improves space utilization, so that whether the snap-fit members are installed in place is detected in a relatively small space. This also broadens application scenarios of the flexible connection system for a cell assembly.

In this way, the cathode-end snap-fit member is located at the edge portion of the first side of the cell assembly in the third direction, the anode-end snap-fit member is located at the edge portion of the second side of the cell assembly in the third direction, the first prism may image the first side of the cell assembly in the third direction, the second prism may image the second side of the cell assembly in the third direction, the upper-level computer may send an image acquisition signal to the first camera and the second camera in a case that the cell assembly reaches the detection station, the first camera may acquire an image of the first side of the cell assembly in the third direction from the first prism to obtain a first image, the second camera may acquire, based on the image acquisition signal, an image of the second side of the cell assembly in the third direction from the second prism to obtain a second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

In some embodiments of this application, as shown in FIG. 3, the system may further include: a light source controller (not shown in the figure), a first light source module 350, and a second light source module 360.

The light source controller may be electrically connected to the upper-level computer, the first light source module 350, and the second light source module 360;
the upper-level computer may be configured to send a brightness control signal to the light source controller in a case that the cell assembly 100 reaches the detection station;
the light source controller may be configured to adjust the brightness of the first light source module 350 and brightness of the second light source module 360 based on the brightness control signal;
the first light source module 350 may be configured to illuminate an edge portion of the first side of the cell assembly 100 in the third direction;
the first camera 320 may be configured to acquire, in a case that the first side of the cell assembly 100 in the third direction is illuminated by the first light source module 350, an image of the first side of the cell assembly 100 in the third direction from the first prism 310 to obtain a first image;
the second light source module 360 may be configured to illuminate an edge portion of the second side of the cell assembly 100 in the third direction; and
the second camera 340 may be configured to acquire, in a case that the second side of the cell assembly 100 in the third direction is illuminated by the second light source module 360, an image of the second side of the cell assembly 100 in the third direction from the second prism 330 to obtain a second image.

Herein, the first light source module 350 and the second light source module 360 may be set to be always on. The light emitted by both the first light source module 350 and the second light source module 360 may be white strip light. A distance between the first light source module 350 and the cell assembly 100 may be set based on an effect of the image acquired by the first camera 320. A distance between the second light source module 360 and the cell assembly 100 may be set based on an effect of the image acquired by the second camera 340.

Specifically, in a case that the cell assembly 100 reaches the detection station, the upper-level computer may send a brightness control signal to the light source controller, the light source controller may adjust the brightness of the first light source module 350 and the brightness of the second light source module 360 based on the brightness control signal, the first light source module 350 may illuminate the edge portion of the first side of the cell assembly 100 in the third direction, the first camera 320 may acquire, in a case that the first side of the cell assembly 100 in the third direction is illuminated by the first light source module 350, the image of the first side of the cell assembly 100 in the third direction from the first prism 310 to obtain the first image, the second light source module 360 may illuminate the edge portion of the second side of the cell assembly 100 in the third direction, and the second camera 340 may acquire, in a case that the second side of the cell assembly 100 in the third direction is illuminated by the second light source module 360, the image of the second side of the cell assembly 100 in the third direction from the second prism 330 to obtain the second image.

For example, the first light source module 350 and the second light source module 360 are spaced apart in the third direction. The edge portion of the first side of the cell assembly 100 in the third direction is spaced apart from the first light source module 350 in the second direction, and a light emitting side of the first light source module 350 faces the edge portion of the first side of the cell assembly 100 in the third direction. The edge portion of the second side of the cell assembly 100 in the third direction is spaced apart from the second light source module 360 in the second direction, and a light emitting side of the second light source module 360 faces the edge portion of the second side of the cell assembly 100 in the third direction.

In this way, the first light source module is used to illuminate the edge portion of the first side of the cell assembly in the third direction, and the second light source module is used to illuminate the edge portion of the second side of the cell assembly in the third direction, facilitating acquisition of the clearer first image and second image.

In some embodiments of this application, the system may further include: a first diffuse reflection plate and a second diffuse reflection plate.

The first diffuse reflection plate may be located between a light emitting side of the first light source module and the first side of the cell assembly in the third direction and may be configured to diffusely reflect a first light ray emitted by the first light source module to form a second light ray;
the first camera may be configured to acquire, in a case that the first side of the cell assembly in the third direction is illuminated by the second light ray, the image of the first side of the cell assembly in the third direction from the first prism to obtain the first image;
the second diffuse reflection plate may be located between a light emitting side of the second light source module and the second side of the cell assembly in the third direction and may be configured to diffusely reflect a third light ray emitted by the second light source module to form a fourth light ray; and
the second camera may be configured to acquire, in a case that the second side of the cell assembly in the third direction is illuminated by the fourth light ray, the image of the second side of the cell assembly in the third direction from the second prism to obtain the second image.

Specifically, the first diffuse reflection plate may diffusely reflect the first light ray emitted by the first light source module to form the second light ray, the second light ray illuminates the first side of the cell assembly in the third direction to form low-angle diffuse reflection illumination, and then the first camera may acquire the image of the first side of the cell assembly in the third direction, in a case of being illuminated by the second light ray, from the first prism to obtain the first image.

The second diffuse reflection plate may diffusely reflect the third light ray emitted by the second light source module to form the fourth light ray, the fourth light ray illuminates the second side of the cell assembly in the third direction to form low-angle diffuse reflection illumination, and then the second camera may acquire the image of the second side of the cell assembly in the third direction, in a case of being illuminated by the fourth light ray, from the second prism to obtain the second image.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments of this application, as shown in FIG. 3, the first light ray emitted by the first light source module 350 forms the second light ray after being diffusely reflected by the first diffuse reflection plate, and the second light ray is projected to the first side of the cell assembly 100 in the third direction;
the first camera 320 may be configured to acquire a position at which the first side of the cell assembly 100 in the third direction is illuminated by the second light ray, to obtain the first image;
the third light ray emitted by the second light source module 360 forms the fourth light ray after being diffusely reflected by the second diffuse reflection plate, and the fourth light ray is projected to the second side of the cell assembly 100 in the third direction; and
the second camera 340 may be configured to acquire a position at which the second side of the cell assembly 100 in the third direction is illuminated by the fourth light ray, to obtain the second image.

Specifically, the first light ray emitted by the first light source module 350 may form the second light ray after being diffusely reflected by the first diffuse reflection plate, the second light ray may be projected to the first side of the cell assembly 100 in the third direction to form low-angle diffuse reflection illumination, and then the first camera 320 may acquire the position at which the first side of the cell assembly 100 in the third direction is illuminated by the second light ray, to obtain the first image.

The third light ray emitted by the second light source module 360 may form the fourth light ray after being diffusely reflected by the second diffuse reflection plate, the fourth light ray may be projected to the second side of the cell assembly 100 in the third direction to form low-angle diffuse reflection illumination, and then the second camera 340 may acquire the position at which the second side of the cell assembly 100 in the third direction is illuminated by the fourth light ray, to obtain the second image.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments of this application, if space is sufficient, the first prism and the second prism may not be used. Specifically, as shown in FIG. 4, the first camera 320 and the second camera 340 may be spaced apart in the third direction, the lens of the first camera 320 and the lens of the second camera 340 are disposed opposite each other, the cell assembly 100 is located between the first camera 320 and the second camera 340, the lens of the first camera 320 faces the edge portion of the first side of the cell assembly 100 in the third direction, and the lens of the second camera 340 faces the edge portion of the second side of the cell assembly 100 in the third direction. For the arrangement of the first light source module 350 and the second light source module 360, reference may be made to other embodiments.

In some embodiments of this application, the system may further include: a lower-level computer.

The lower-level computer may be electrically connected to the upper-level computer and may be configured to send a trigger signal to the upper-level computer in a case that the cell assembly reaches the detection station and both the first camera and the second camera are ready; and
the upper-level computer may be configured to send an image acquisition signal to the first camera and the second camera in response to the trigger signal.

Herein, the lower-level computer may be a controller, and specifically may be a programmable logic controller (Programmable Logic Controller, PLC). The upper-level computer may be a visual upper-level computer.

Specifically, in a case that the cell assembly reaches the detection station, the PLC may send an in-place signal to the upper-level computer. In a case that both the first camera and the second camera are ready, the upper-level computer may send a reset success signal to the PLC, and then the PLC may send a trigger signal to the upper-level computer. The upper-level computer may send an image acquisition signal to the first camera and the second camera in response to the trigger signal.

In addition, after the first camera and the second camera complete image acquisition, the upper-level computer may further send a photographing complete signal to the PLC. After the first camera and the second camera are successfully reset, the upper-level computer may further send a reset success signal to the PL.

In this way, the lower-level computer determines whether the cell assembly is in place and whether the first camera and the second camera are ready, so as to accurately trigger the upper-level computer to control other modules, thereby successfully completing visual detection.

In some embodiments of this application, the upper-level computer may be further configured to send an exposure time control signal to the first camera and the second camera;
the first camera may be further configured to adjust an exposure time based on the exposure time control signal and acquire the first image based on the adjusted exposure time; and
the second camera may be further configured to adjust an exposure time based on the exposure time control signal and acquire the second image based on the adjusted exposure time.

Specifically, the upper-level computer may send the exposure time control signal to the first camera and the second camera in response to the trigger signal, so that the first camera adjusts its exposure time based on the exposure time control signal and acquires the first image based on the adjusted exposure time, and the second camera adjusts its exposure time based on the exposure time control signal and acquires the second image based on the adjusted exposure time.

In this way, the upper-level computer controls the exposure times of the first camera and the second camera, allowing the acquired images to better meet user requirements.

In some embodiments of this application, the lower-level computer may be further configured to send an identifier of the cell assembly to the upper-level computer;
the upper-level computer may be further configured to associate a detection result with the identifier of the cell assembly; and
the lower-level computer may be further configured to search for the detection result based on the identifier of the cell assembly.

Herein, the detection result may include the first detection result and the second detection result.

The identifier of the cell assembly may be a cell code or a serial number (Serial Number, SN) of the cell assembly.

Specifically, the PLC may further send, in a case of receiving the cell code of the cell assembly read by a code reader, the cell code to the upper-level computer, and the upper-level computer may associate, after receiving the cell code, the detection result of the cell assembly with the cell code. In this way, the lower-level computer searches for the detection result of the cell assembly based on the cell code of the cell assembly.

In this way, the identifier of the cell assembly is associated with the detection result, facilitating indexing and retrieval of the detection result of the cell assembly.

An embodiment of this application further provides a detection method for a cell assembly. The detection method for a cell assembly may be executed by a flexible connection system for a cell assembly. The following describes the detection method for a cell assembly according to the embodiment of this application.

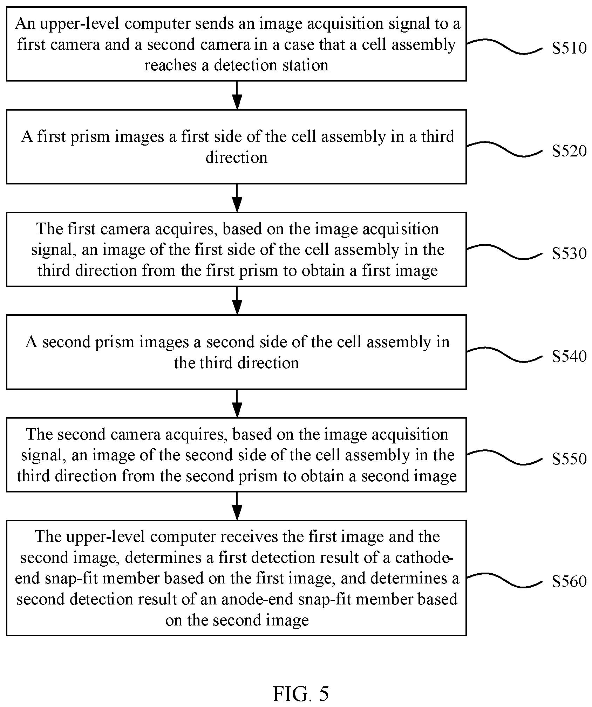

FIG. 5 is a schematic flowchart of a detection method for a cell assembly according to some embodiments of this application.

As shown in FIG. 5, the detection method for a cell assembly may include the following steps:
S510. sending, by an upper-level computer, an image acquisition signal to a first camera and a second camera in a case that the cell assembly reaches a detection station;
S520. imaging, by a first prism, a first side of the cell assembly in a third direction;
S530. acquiring, by the first camera based on the image acquisition signal, an image of the first side of the cell assembly in the third direction from the first prism to obtain a first image;
S540, imaging, by a second prism, a second side of the cell assembly in the third direction;
S550, acquiring, by the second camera based on the image acquisition signal, an image of the second side of the cell assembly in the third direction from the second prism to obtain a second image; and
S560, receiving, by the upper-level computer, the first image and the second image, determining a first detection result of a cathode-end snap-fit member based on the first image, and determining a second detection result of an anode-end snap-fit member based on the second image.

The cell assembly may include a top cover, a top bracket, and two bare cells, the two bare cells may be spaced apart in a first direction, the top cover and the top bracket may be located between the two bare cells, the top bracket may be disposed on a side of the top cover in a second direction and fixed to the top cover via the cathode-end snap-fit member and the anode-end snap-fit member, the cathode-end snap-fit member may be located at an edge portion of the first side of the cell assembly in the third direction, and the anode-end snap-fit member may be located at an edge portion of the second side of the cell assembly in the third direction, the first direction, the second direction, and the third direction intersecting with each other.

The first detection result may be used to indicate whether the cathode-end snap-fit member is installed in place, and the second detection result may be used to indicate whether the anode-end snap-fit member is installed in place.

For the specific processes of S510 to S560, reference may be made to the above embodiments, and details are not repeated herein.

Thus, the cathode-end snap-fit member is located at the edge portion of the first side of the cell assembly in the third direction, the anode-end snap-fit member is located at the edge portion of the second side of the cell assembly in the third direction, the first prism may image the first side of the cell assembly in the third direction, the second prism may image the second side of the cell assembly in the third direction, the upper-level computer may send an image acquisition signal to the first camera and the second camera in a case that the cell assembly reaches the detection station, the first camera may acquire the image of the first side of the cell assembly in the third direction from the first prism to obtain the first image, the second camera may acquire, based on the image acquisition signal, the image of the second side of the cell assembly in the third direction from the second prism to obtain the second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

In some embodiments of this application, in a case that the first detection result indicates that the cathode-end snap-fit member is not installed in place, the first detection result may further include a reason why the cathode-end snap-fit member is not installed in place; where
the reason may include any one of: a snap-fit member on a single side is not fastened, snap-fit members on two sides are not fastened, and a snap-fit member is placed reversely.

Herein, the number of the cathode-end snap-fit members may be 2. That a snap-fit member on a single side is not fastened may indicate that only one of the two cathode-end snap-fit members is not fastened, that snap-fit members on two sides are not fastened may indicate that both of the two cathode-end snap-fit members are not fastened, and that a snap-fit member is placed reversely may indicate that the cathode-end snap-fit member is located at an installation position of the anode-end snap-fit member.

In this way, it is possible to determine whether the cathode snap-fit member is installed in place, and also to determine, in a case that the cathode snap-fit member is not installed in place, the reason why the cathode snap-fit member is not installed in place.

In some embodiments of this application, in a case that the second detection result indicates that the anode-end snap-fit member is not installed in place, the second detection result may further include a reason why the anode-end snap-fit member is not installed in place; where
the reason may include any one of: a snap-fit member on a single side is not fastened, snap-fit members on two sides are not fastened, and a snap-fit member is placed reversely.

Herein, the number of the anode-end snap-fit members may be 2. That a snap-fit member on a single side is not fastened may indicate that only one of the two anode-end snap-fit members is not fastened, that snap-fit members on two sides are not fastened may indicate that both of the two anode-end snap-fit members are not fastened, and that a snap-fit member is placed reversely may indicate that the anode-end snap-fit member is located at an installation position of the cathode-end snap-fit member.

In this way, it is possible to determine whether the anode snap-fit member is installed in place, and also to determine, in a case that the anode snap-fit member is not installed in place, the reason why the anode snap-fit member is not installed in place.

In some embodiments of this application, the determining a first detection result of the cathode-end snap-fit member based on the first image may include:
performing, by using a snap-fit member detection model, detection on the cathode-end snap-fit member based on the first image to obtain the first detection result.

Specifically, the first image may be input to the snap-fit member detection model, and the snap-fit member detection model may perform detection on the cathode-end snap-fit member based on the first image and output the first detection result.

In this way, detection on the cathode-end snap-fit member is performed quickly and accurately through an AI algorithm.

In some embodiments of this application, the determining a second detection result of the anode-end snap-fit member based on the second image may include:
performing, by using the snap-fit member detection model, detection on the anode-end snap-fit member based on the second image to obtain the second detection result.

Specifically, the second image may be input to the snap-fit member detection model, and the snap-fit member detection model may perform detection on the anode-end snap-fit member based on the second image and output the second detection result.

In this way, detection on the anode-end snap-fit member is performed quickly and accurately through an AI algorithm.

In some embodiments of this application, the snap-fit member detection model may include a target detection network, a semantic segmentation network, and a result determining network; and
the performing, by using a snap-fit member detection model, detection on the cathode-end snap-fit member based on the first image to obtain the first detection result may include:
performing, by using the target detection network, target detection on the first image to obtain a first region corresponding to the cell assembly;
performing, by using the semantic segmentation network, semantic segmentation on the first image based on the first region to obtain a mask image; and
determining, by using the result determining network, the first detection result based on a width of a preset position of the first region in the mask image.

Herein, the first region may be a region in the first image where the top cover and the top bracket are located. The preset position may be a position of the cathode-end snap-fit member. In a case that there are multiple cathode-end snap-fit members, each cathode-end snap-fit member corresponds to one preset position.

The width of the preset position varies between a case that the cathode-end snap-fit member is installed in place and a case that it is not installed in place. Therefore, the first detection result is determined based on the width of the preset position.

Specifically, in a case that the cathode-end snap-fit member is installed in place, the top cover and the top bracket are parallel, and the width of the preset position complies with a standard width. In a case that the cathode-end snap-fit member is not installed in place, the top bracket is tilted, and the width of the preset position is greater than the standard width.

For example, a traditional algorithm Halcon may be used to process the first image.

In this way, the first region is first determined through target detection, a mask image is obtained using the semantic segmentation network, and then a result is determined based on the width of the preset position, thereby quickly and accurately determining the first detection result.

In some embodiments of this application, the preset position may include a first position, a second position, and a third position, where the first position and the third position may be positions of the cathode-end snap-fit member, and the second position may be located between the first position and the second position; and
the determining, by using the result determining network, the first detection result based on a width of a preset position of the first region in the mask image may include:
in a case that widths of the first position, the second position, and the third position are all equal to a first threshold, determining that the first detection result indicates that the cathode-end snap-fit member is installed in place;
in a case that a width of the first position is greater than the first threshold and a width of the third position is equal to the first threshold, or a width of the first position is equal to the first threshold and a width of the third position is greater than the first threshold, determining that the first detection result indicates that the cathode-end snap-fit member is not installed in place and the reason is that a snap-fit member on a single side is not fastened;
in a case that widths of the first position, the second position, and the third position are all greater than a second threshold, determining that the first detection result indicates that the cathode-end snap-fit member is not installed in place and the reason is that snap-fit members on two sides are not fastened; and
in a case that widths of the first position and the third position are both greater than the first threshold and less than the second threshold and a width of the second position is greater than the second threshold, determining that the first detection result indicates that the cathode-end snap-fit member is not installed in place and the reason is that a snap-fit member is placed reversely.

Herein, in a case that the number of the cathode-end snap-fit members is 2, the preset position may include a first position, a second position, and a third position, where the first position and the third position may be positions of the two cathode-end snap-fit members, and the second position may be located between the first position and the second position. For example, the second position may be located at the center of the first position and the second position.

The first threshold may be a standard width of the first position, the second position, and the third position. The second threshold may be greater than the first threshold. Both the first threshold and the second threshold may be set according to actual requirements.

Specifically, if the widths of the first position, the second position, and the third position are all equal to the first threshold, it is determined that the first detection result indicates that the cathode-end snap-fit member is installed in place; if the width of the first position is greater than the first threshold and the width of the third position is equal to the first threshold, or the width of the first position is equal to the first threshold and the width of the third position is greater than the first threshold, it is determined that the first detection result indicates that the cathode-end snap-fit member is not installed in place and the reason is that a snap-fit member on a single side is not fastened; if the widths of the first position, the second position, and the third position are all greater than the second threshold, it is determined that the first detection result indicates that the cathode-end snap-fit member is not installed in place and the reason is that snap-fit members on two sides are not fastened; and if the widths of the first position and the third position are both greater than the first threshold and less than the second threshold and the width of the second position is greater than the second threshold, it is determined that the first detection result indicates that the cathode-end snap-fit member is not installed in place and the reason is that a snap-fit member is placed reversely.

In this way, whether the cathode-end snap-fit member is installed in place is accurately determined through the above process, and if it is not installed in place, the reason why it is not installed in place is also accurately determined, thereby avoiding overkill or underkill during detection of the cell assembly.

The specific process of performing, by using the snap-fit member detection model, detection on the anode-end snap-fit member based on the second image to obtain the second detection result is the same as the specific process of performing, by using the snap-fit member detection model, detection on the cathode-end snap-fit member based on the first image to obtain the first detection result, and details are not repeated herein.

In some embodiments of this application, a spacing between the two cathode-end snap-fit members may be different from a spacing between the two anode-end snap-fit members. Based on this, the preset position corresponding to the cathode-end snap-fit member may be different from the preset position corresponding to the anode-end snap-fit member.

In some embodiments of this application, the method may further include:
sending, by the upper-level computer, a brightness control signal to a light source controller in a case that the cell assembly reaches the detection station;
adjusting, by the light source controller, brightness of a first light source module and brightness of a second light source module based on the brightness control signal;
illuminating, by the first light source module, an edge portion of the first side of the cell assembly in the third direction; and
illuminating, by the second light source module, an edge portion of the second side of the cell assembly in the third direction; where
S530 may include:
   acquiring, by the first camera based on the image acquisition signal in a case that the first side of the cell assembly in the third direction is illuminated by the first light source module, the image of the first side of the cell assembly in the third direction from the first prism to obtain the first image; and
   S550 may include:
      acquiring, by the second camera based on the image acquisition signal in a case that the second side of the cell assembly in the third direction is illuminated by the second light source module, the image of the second side of the cell assembly in the third direction from the second prism to obtain the second image.

For the specific process, reference may be made to the above embodiments, and details are not repeated herein.

In this way, the first light source module is used to illuminate the edge portion of the first side of the cell assembly in the third direction, and the second light source module is used to illuminate the edge portion of the second side of the cell assembly in the third direction, facilitating acquisition of the clearer first image and second image.

In some embodiments of this application, the method may further include:
diffusely reflecting, by a first diffuse reflection plate, a first light ray emitted by the first light source module to form a second light ray; and
diffusely reflecting, by a second diffuse reflection plate, a third light ray emitted by the second light source module to form a fourth light ray; where
the acquiring, by the first camera based on the image acquisition signal in a case that the first side of the cell assembly in the third direction is illuminated by the first light source module, the image of the first side of the cell assembly in the third direction from the first prism to obtain the first image may include:
   acquiring, by the first camera based on the image acquisition signal in a case that the first side of the cell assembly in the third direction is illuminated by the second light ray, the image of the first side of the cell assembly in the third direction from the first prism to obtain the first image; and
   the acquiring, by the second camera based on the image acquisition signal in a case that the second side of the cell assembly in the third direction is illuminated by the second light source module, the image of the second side of the cell assembly in the third direction from the second prism to obtain the second image may include:
      acquiring, by the second camera based on the image acquisition signal in a case that the second side of the cell assembly in the third direction is illuminated by the fourth light ray, the image of the second side of the cell assembly in the third direction from the second prism to obtain the second image.

For the specific process, reference may be made to the above embodiments, and details are not repeated herein.

In this way, the first diffuse reflection plate diffusely reflects the first light ray emitted by the first light source module, and the second diffuse reflection plate diffusely reflects the light ray emitted by the second light source module, forming low-angle diffuse reflection illumination. This avoids mutual interference between light rays from the two light source modules, and also avoids interference from other light rays, thereby enhancing contrast of grayscale values between the top cover and the top bracket, and facilitating accurate detection of whether the cathode-end snap-fit member and the anode snap-fit member are installed in place.

In some embodiments of this application, the first prism may include a first reflective area, the second prism may include a second reflective area, and the method may further include:
reflecting, by the first reflective area, a fifth light ray reflected from the first side of the cell assembly in the third direction to the first camera; and
reflecting, by the second reflective area, a sixth light ray reflected from the second side of the cell assembly in the third direction to the second camera.

For the specific process, reference may be made to the above embodiments, and details are not repeated herein.

In this way, the first prism is used to reflect the first side of the cell assembly in the third direction to the first camera, and the second prism is used to reflect the second side of the cell assembly in the third direction to the second camera. This reduces the space occupied by the flexible connection system for a cell assembly, and improves space utilization, so that whether the snap-fit members are installed in place is detected in a relatively small space. This also broadens application scenarios of the flexible connection system for a cell assembly.

In some embodiments of this application, S510 may include:
sending, by a lower-level computer, a trigger signal to the upper-level computer in a case that the cell assembly reaches the detection station and both the first camera and the second camera are ready; and
sending, by the upper-level computer, the image acquisition signal to the first camera and the second camera in response to the trigger signal.

For the specific process, reference may be made to the above embodiments, and details are not repeated herein.

In this way, the lower-level computer determines whether the cell assembly is in place and whether the first camera and the second camera are ready, so as to accurately trigger the upper-level computer to control other modules, thereby successfully completing visual detection.

In some embodiments of this application, the method may further include:
sending, by the upper-level computer, an exposure time control signal to the first camera and the second camera; where
the acquiring an image of the first side of the cell assembly in the third direction from the first prism to obtain a first image includes:
   adjusting, by the first camera, an exposure time based on the exposure time control signal and acquiring, based on the adjusted exposure time, the image of the first side of the cell assembly in the third direction from the first prism to obtain the first image; and
   the acquiring an image of the second side of the cell assembly in the third direction from the second prism to obtain a second image includes:
      adjusting, by the second camera, an exposure time based on the exposure time control signal and acquiring, based on the adjusted exposure time, the image of the second side of the cell assembly in the third direction from the second prism to obtain the second image.

For the specific process, reference may be made to the above embodiments, and details are not repeated herein.

In this way, the upper-level computer controls the exposure times of the first camera and the second camera, allowing the acquired images to better meet user requirements.

In some embodiments of this application, the method may further include:
sending, by the lower-level computer, an identifier of the cell assembly to the upper-level computer;
associating, by the upper-level computer, a detection result with the identifier of the cell assembly, where the detection result includes the first detection result and the second detection result; and
searching for, by the lower-level computer, the detection result based on the identifier of the cell assembly.

For the specific process, reference may be made to the above embodiments, and details are not repeated herein.

In this way, the identifier of the cell assembly is associated with the detection result, facilitating indexing and retrieval of the detection result of the cell assembly.

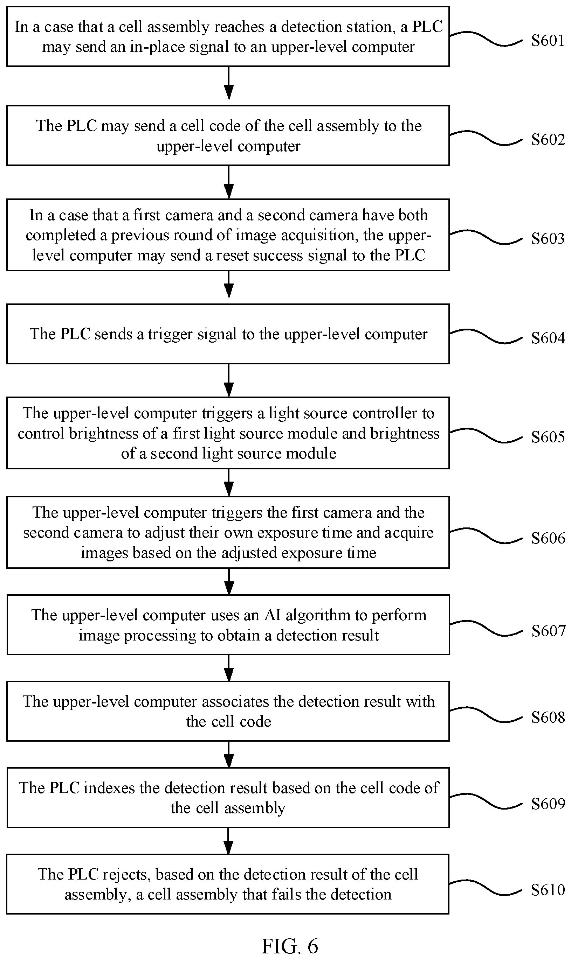

For better description of the entire solution, a specific example is given based on the above embodiments. As shown in FIG. 6, the detection method for a cell assembly may include S601 to S610, which are explained in detail below.

S601. In a case that the cell assembly reaches a detection station, a PLC may send an in-place signal to an upper-level computer.

S602. The PLC may send a cell code of the cell assembly to the upper-level computer.

S603. In a case that both the first camera and the second camera have completed a previous round of image acquisition, the upper-level computer may send a reset success signal to the PLC.

S604. The PLC sends a trigger signal to the upper-level computer.

S605. The upper-level computer triggers a light source controller to control brightness of a first light source module and brightness of a second light source module.

S606. The upper-level computer triggers a first camera and a second camera to adjust their own exposure time and acquire images based on the adjusted exposure time.

S607. The upper-level computer uses an AI algorithm to perform image processing to obtain a detection result.

S608. The upper-level computer associates the detection result with the cell code.

S609. The PLC indexes the detection result based on the cell code of the cell assembly.

S610. The PLC rejects, based on the detection result of the cell assembly, a cell assembly that fails the detection.

For the specific processes of S601 to S610, reference may be made to the above embodiments, and details are not repeated herein.

In this way, the cathode-end snap-fit member is located at the edge portion of the first side of the cell assembly in the third direction, the anode-end snap-fit member is located at the edge portion of the second side of the cell assembly in the third direction, the first prism may image the first side of the cell assembly in the third direction, the second prism may image the second side of the cell assembly in the third direction, the upper-level computer may send an image acquisition signal to the first camera and the second camera in a case that the cell assembly reaches the detection station, the first camera may acquire an image of the first side of the cell assembly in the third direction from the first prism to obtain a first image, the second camera may acquire, based on the image acquisition signal, an image of the second side of the cell assembly in the third direction from the second prism to obtain a second image, and the upper-level computer may determine, based on the first image, whether the cathode-end snap-fit member is installed in place, and determine, based on the second image, whether the anode-end snap-fit member is installed in place, thereby realizing detection of whether the snap-fit members are installed in place.

Although this application has been described with reference to the preferred embodiments, various modifications are made to this application without departing from the scope of this application and the components therein may be replaced with equivalents. In particular, as long as there is no structural conflict, the various technical features mentioned in some embodiments may be combined in any manner. This application is not limited to the specific embodiments disclosed in this specification, but includes all technical solutions falling within the scope of the claims.

## Claims

1. A flexible connection system for a cell assembly, wherein the cell assembly comprises a top cover, a top bracket, and two bare cells, the two bare cells are spaced apart in a first direction, the top cover and the top bracket are located between the two bare cells, the top bracket is disposed on a side of the top cover in a second direction and is fixed to the top cover via a cathode-end snap-fit member and an anode-end snap-fit member, the cathode-end snap-fit member is located at an edge portion of a first side of the cell assembly in a third direction, and the anode-end snap-fit member is located at an edge portion of a second side of the cell assembly in the third direction, the first direction, the second direction, and the third direction intersecting with each other; and the system comprises:
an upper-level computer, electrically connected to a first camera and a second camera and configured to send an image acquisition signal to the first camera and the second camera in a case that the cell assembly reaches a detection station;
a first prism, configured to image the first side of the cell assembly in the third direction;
the first camera, configured to acquire, based on the image acquisition signal, an image of the first side of the cell assembly in the third direction from the first prism to obtain a first image;
a second prism, configured to image the second side of the cell assembly in the third direction; and
the second camera, configured to acquire, based on the image acquisition signal, an image of the second side of the cell assembly in the third direction from the second prism to obtain a second image; wherein
the upper-level computer is further configured to receive the first image and the second image, determine a first detection result of the cathode-end snap-fit member based on the first image, and determine a second detection result of the anode-end snap-fit member based on the second image, wherein the first detection result is used to indicate whether the cathode-end snap-fit member is installed in place, and the second detection result is used to indicate whether the anode-end snap-fit member is installed in place.

2. The system according to claim 1, wherein the system further comprises:
a light source controller, electrically connected to the upper-level computer, a first light source module, and a second light source module; wherein
the upper-level computer is configured to send a brightness control signal to the light source controller in a case that the cell assembly reaches the detection station; and
the light source controller is configured to adjust brightness of the first light source module and brightness of the second light source module based on the brightness control signal;
the first light source module, configured to illuminate an edge portion of the first side of the cell assembly in the third direction; wherein
the first camera is configured to acquire, in a case that the first side of the cell assembly in the third direction is illuminated by the first light source module, an image of the first side of the cell assembly in the third direction from the first prism to obtain a first image; and
the second light source module, configured to illuminate an edge portion of the second side of the cell assembly in the third direction; wherein
the second camera is configured to acquire, in a case that the second side of the cell assembly in the third direction is illuminated by the second light source module, an image of the second side of the cell assembly in the third direction from the second prism to obtain a second image.

3. The system according to claim 2, wherein the system further comprises:
a first diffuse reflection plate, located between a light emitting side of the first light source module and the first side of the cell assembly in the third direction and configured to diffusely reflect a first light ray emitted by the first light source module to form a second light ray; wherein
the first camera is configured to acquire, in a case that the first side of the cell assembly in the third direction is illuminated by the second light ray, the image of the first side of the cell assembly in the third direction from the first prism to obtain the first image; and
a second diffuse reflection plate, located between a light emitting side of the second light source module and the second side of the cell assembly in the third direction and configured to diffusely reflect a third light ray emitted by the second light source module to form a fourth light ray; wherein
the second camera is configured to acquire, in a case that the second side of the cell assembly in the third direction is illuminated by the fourth light ray, the image of the second side of the cell assembly in the third direction from the second prism to obtain the second image.

4. The system according to any one of claims 1 to 3, wherein the first prism comprises a first reflective area, wherein the first reflective area is configured to reflect a fifth light ray reflected from the first side of the cell assembly in the third direction to the first camera; and
the second prism comprises a second reflective area, wherein the second reflective area is configured to reflect a sixth light ray reflected from the second side of the cell assembly in the third direction to the second camera.

5. The system according to claim 3, wherein the first light ray emitted by the first light source module forms the second light ray after being diffusely reflected by the first diffuse reflection plate, and the second light ray is projected to the first side of the cell assembly in the third direction;
the first camera is configured to acquire a position at which the first side of the cell assembly in the third direction is illuminated by the second light ray, to obtain the first image;
the third light ray emitted by the second light source module forms the fourth light ray after being diffusely reflected by the second diffuse reflection plate, and the fourth light ray is projected to the second side of the cell assembly in the third direction; and
the second camera is configured to acquire a position at which the second side of the cell assembly in the third direction is illuminated by the fourth light ray, to obtain the second image.

6. The system according to any one of claims 1 to 5, wherein the system further comprises:
a lower-level computer, electrically connected to the upper-level computer and configured to send a trigger signal to the upper-level computer in a case that the cell assembly reaches the detection station and both the first camera and the second camera are ready; wherein
the upper-level computer is configured to send the image acquisition signal to the first camera and the second camera in response to the trigger signal.

7. The system according to any one of claims 1 to 6, wherein the upper-level computer is further configured to send an exposure time control signal to the first camera and the second camera;
the first camera is further configured to adjust an exposure time based on the exposure time control signal and acquire the first image based on the adjusted exposure time; and
the second camera is further configured to adjust an exposure time based on the exposure time control signal and acquire the second image based on the adjusted exposure time.

8. The system according to claim 6, wherein the lower-level computer is further configured to send an identifier of the cell assembly to the upper-level computer;
the upper-level computer is further configured to associate a detection result with the identifier of the cell assembly, wherein the detection result comprises the first detection result and the second detection result; and
the lower-level computer is further configured to search for the detection result based on the identifier of the cell assembly.

9. The system according to any one of claims 1 to 8, wherein in a case that the first detection result indicates that the cathode-end snap-fit member is not installed in place, the first detection result further comprises a reason why the cathode-end snap-fit member is not installed in place; wherein
the reason comprises any one of: a snap-fit member on a single side is not fastened, snap-fit members on two sides are not fastened, and a snap-fit member is placed reversely.

10. A detection method for a cell assembly, wherein the cell assembly comprises a top cover, a top bracket, and two bare cells, the two bare cells are spaced apart in a first direction, the top cover and the top bracket are located between the two bare cells, the top bracket is disposed on a side of the top cover in a second direction and is fixed to the top cover via a cathode-end snap-fit member and an anode-end snap-fit member, the cathode-end snap-fit member is located at an edge portion of a first side of the cell assembly in a third direction, and the anode-end snap-fit member is located at an edge portion of a second side of the cell assembly in the third direction, the first direction, the second direction, and the third direction intersecting with each other; and the method comprises:
sending, by an upper-level computer, an image acquisition signal to a first camera and a second camera in a case that the cell assembly reaches a detection station;
imaging, by a first prism, the first side of the cell assembly in the third direction;
acquiring, by the first camera based on the image acquisition signal, an image of the first side of the cell assembly in the third direction from the first prism to obtain a first image;
imaging, by a second prism, the second side of the cell assembly in the third direction;
acquiring, by the second camera based on the image acquisition signal, an image of the second side of the cell assembly in the third direction from the second prism to obtain a second image; and
receiving, by the upper-level computer, the first image and the second image, determining a first detection result of the cathode-end snap-fit member based on the first image, and determining a second detection result of the anode-end snap-fit member based on the second image, wherein the first detection result is used to indicate whether the cathode-end snap-fit member is installed in place, and the second detection result is used to indicate whether the anode-end snap-fit member is installed in place.

11. The method according to claim 10, wherein the method further comprises:
sending, by the upper-level computer, a brightness control signal to a light source controller in a case that the cell assembly reaches the detection station;
adjusting, by the light source controller, brightness of a first light source module and brightness of a second light source module based on the brightness control signal;
illuminating, by the first light source module, an edge portion of the first side of the cell assembly in the third direction; and
illuminating, by the second light source module, an edge portion of the second side of the cell assembly in the third direction; wherein
the acquiring, by the first camera based on the image acquisition signal, an image of the first side of the cell assembly in the third direction from the first prism to obtain a first image comprises:
acquiring, by the first camera based on the image acquisition signal in a case that the first side of the cell assembly in the third direction is illuminated by the first light source module, the image of the first side of the cell assembly in the third direction from the first prism to obtain the first image; and
the acquiring, by the second camera based on the image acquisition signal, an image of the second side of the cell assembly in the third direction from the second prism to obtain a second image comprises:
acquiring, by the second camera based on the image acquisition signal in a case that the second side of the cell assembly in the third direction is illuminated by the second light source module, the image of the second side of the cell assembly in the third direction from the second prism to obtain the second image.

12. The method according to claim 11, wherein the method further comprises:
diffusely reflecting, by a first diffuse reflection plate, a first light ray emitted by the first light source module to form a second light ray; and
diffusely reflecting, by a second diffuse reflection plate, a third light ray emitted by the second light source module to form a fourth light ray; wherein
the acquiring, by the first camera based on the image acquisition signal in a case that the first side of the cell assembly in the third direction is illuminated by the first light source module, the image of the first side of the cell assembly in the third direction from the first prism to obtain the first image comprises:
acquiring, by the first camera based on the image acquisition signal in a case that the first side of the cell assembly in the third direction is illuminated by the second light ray, the image of the first side of the cell assembly in the third direction from the first prism to obtain the first image; and
the acquiring, by the second camera based on the image acquisition signal in a case that the second side of the cell assembly in the third direction is illuminated by the second light source module, the image of the second side of the cell assembly in the third direction from the second prism to obtain the second image comprises:
acquiring, by the second camera based on the image acquisition signal in a case that the second side of the cell assembly in the third direction is illuminated by the fourth light ray, the image of the second side of the cell assembly in the third direction from the second prism to obtain the second image.

13. The method according to any one of claims 10 to 12, wherein the first prism comprises a first reflective area, the second prism comprises a second reflective area, and the method further comprises:
reflecting, by the first reflective area, a fifth light ray reflected from the first side of the cell assembly in the third direction to the first camera; and
reflecting, by the second reflective area, a sixth light ray reflected from the second side of the cell assembly in the third direction to the second camera.

14. The method according to any one of claims 10 to 13, wherein the sending, by an upper-level computer, an image acquisition signal to a first camera and a second camera in a case that the cell assembly reaches a detection station comprises:
sending, by a lower-level computer, a trigger signal to the upper-level computer in a case that the cell assembly reaches the detection station and both the first camera and the second camera are ready; and
sending, by the upper-level computer, the image acquisition signal to the first camera and the second camera in response to the trigger signal.

15. The method according to any one of claims 10 to 14, wherein the method further comprises:
sending, by the upper-level computer, an exposure time control signal to the first camera and the second camera; wherein
the acquiring an image of the first side of the cell assembly in the third direction from the first prism to obtain a first image comprises:
adjusting, by the first camera, an exposure time based on the exposure time control signal and acquiring, based on the adjusted exposure time, the image of the first side of the cell assembly in the third direction from the first prism to obtain the first image; and
the acquiring an image of the second side of the cell assembly in the third direction from the second prism to obtain a second image comprises:
adjusting, by the second camera, an exposure time based on the exposure time control signal and acquiring, based on the adjusted exposure time, the image of the second side of the cell assembly in the third direction from the second prism to obtain the second image.

16. The method according to claim 14, wherein the method further comprises:
sending, by the lower-level computer, an identifier of the cell assembly to the upper-level computer;
associating, by the upper-level computer, a detection result with the identifier of the cell assembly, wherein the detection result comprises the first detection result and the second detection result; and
searching for, by the lower-level computer, the detection result based on the identifier of the cell assembly.

17. The method according to any one of claims 10 to 16, wherein in a case that the first detection result indicates that the cathode-end snap-fit member is not installed in place, the first detection result further comprises a reason why the cathode-end snap-fit member is not installed in place; wherein
the reason comprises any one of: a snap-fit member on a single side is not fastened, snap-fit members on two sides are not fastened, and a snap-fit member is placed reversely.

18. The method according to any one of claims 10 to 17, wherein the determining a first detection result of the cathode-end snap-fit member based on the first image comprises:
performing, by using a snap-fit member detection model, detection on the cathode-end snap-fit member based on the first image to obtain the first detection result.

19. The method according to claim 18, **characterized in that** the snap-fit member detection model comprises a target detection network, a semantic segmentation network, and a result determining network; and
the performing, by using a snap-fit member detection model, detection on the cathode-end snap-fit member based on the first image to obtain the first detection result comprises:
performing, by using the target detection network, target detection on the first image to obtain a first region corresponding to the cell assembly;
performing, by using the semantic segmentation network, semantic segmentation on the first image based on the first region to obtain a mask image; and
determining, by using the result determining network, the first detection result based on a width of a preset position of the first region in the mask image.

20. The method according to claim 19, wherein the preset position comprises a first position, a second position, and a third position, wherein the first position and the third position are positions of the cathode-end snap-fit member, and the second position is located between the first position and the second position; and
the determining, by using the result determining network, the first detection result based on a width of a preset position of the first region in the mask image comprises:
in a case that widths of the first position, the second position, and the third position are all equal to a first threshold, determining that the first detection result indicates that the cathode-end snap-fit member is installed in place;
in a case that a width of the first position is greater than the first threshold and a width of the third position is equal to the first threshold, or a width of the first position is equal to the first threshold and a width of the third position is greater than the first threshold, determining that the first detection result indicates that the cathode-end snap-fit member is not installed in place and the reason is that a snap-fit member on a single side is not fastened;
in a case that widths of the first position, the second position, and the third position are all greater than a second threshold, determining that the first detection result indicates that the cathode-end snap-fit member is not installed in place and the reason is that snap-fit members on two sides are not fastened, wherein the second threshold is greater than the first threshold; and
in a case that widths of the first position and the third position are both greater than the first threshold and less than the second threshold and a width of the second position is greater than the second threshold, determining that the first detection result indicates that the cathode-end snap-fit member is not installed in place and the reason is that a snap-fit member is placed reversely.
